# EUROPEAN PATENT APPLICATION

(11) **EP 2 866 090 A2**
(43) Date of publication of application: **29.04.2015**
(21) Application number: 13807562.7
(22) Date of filing: 11.06.2013
(51) Int. Cl.: G03B 37/04, G01C 11/02

(54) **METHOD FOR PRODUCING AN IMAGE OF THE SURFACE OF THE EARTH FROM A MOVING CARRIER AND A DEVICE FOR IMPLEMENTING SAME**

(30) Priority: 21.06.2012 RU 2012125799
(71) Applicant: Baryshnikov, Aleksandr Nikolaevich, Moscow 109507 (RU); Bezobrazov, Vladimir Sergeevich, Solnechnogorskiy raion, Moskovskaya obl. 141552 (RU); Gribach, Aleksandr Alekseevich, Zelenograd, Moscow 124365 (RU); Ivanov, Vasiliy Petrovich, Moscow 121615 (RU); Maksimyak, Sergey Petrovich, Leninskiy raion, Moskovskaya obl. 142770 (RU)
(72) Inventor: Baryshnikov, Aleksandr Nikolaevich, Moscow 109507 (RU); Bezobrazov, Vladimir Sergeevich, Solnechnogorskiy raion, Moskovskaya obl. 141552 (RU); Gribach, Aleksandr Alekseevich, Zelenograd, Moscow 124365 (RU); Ivanov, Vasiliy Petrovich, Moscow 121615 (RU); Maksimyak, Sergey Petrovich, Leninskiy raion, Moskovskaya obl. 142770 (RU)
(74) Representative: Jeck, Anton
(86) International application number: PCT/RU2013/000483
(87) International publication number: WO 2013/191583

(57) **Abstract**

The method and a device for obtaining the Earth's image from a moving carrier are provided and relate to remote sensing of the Earth, specifically, to aerial photography, and can be used for photogrammetry, monitoring of vast areas and extended objects, large-scale mapping surveys and engineering design and surveys.

The method provides Earth photographing at an angle to the vertical, which gradually increases toward the ends of the frame's longer side oriented transversally to the flight direction. During the formation of subframes making the frame of central projection, all photo sensors are exposed simultaneously, and the frame's bandwidth to length ratio is maintained at the 1 : 5...100 range. The device comprises photo sensors fixed in a holding fixture in such a way that, their optic axes projections onto a vertical plane are at an angle to the vertical, said angle unidirectionally varies from one photo sensor to another by the amount not exceeding the projection of the photo sensor view angle to said plane. Projections of said photo sensors' optic axes to another vertical plane, perpendicular to the first one form an angle that is no larger than 50 % of the projection of the photo sensor view angle onto this plane, thus ensuring high performance of the survey with concurrent improvement of the quality of the output image.

## Description

The present invention relates to the remote sensing of the Earth, in particular, aerial photography, and can be used for photogrammetry, monitoring of vast areas and extended objects, large-scale mapping surveys and engineering design and survey.

### Related Art

There is a known method of aircraft ground surveying, wherein a simultaneous image is acquired on photo sensor and video equipment displays, then an image is selected to be used as a guide for the recording of viewed objects; and a target is selected on the image as an observation object for registration. With a manual manipulator, allowing for an adjustment of the recorder along and across the aircraft axis within the preset viewing angles, the cursor on the photo sensor display is pointed to the selected target and a photo is taken by pressing a button on the manipulator handle (RF Patent No. 2298150, 2005).

This known method does not allow for wide-area surveys and requires a lot of manual operations.

There is a known method for large-scale aircraft ground surveying wherein a camera is set over a preset point on the surface for a plane survey on an established scale. Then the camera is lowered to the height of the enlarged scale survey, ensuring confident recognition of the reference point in the digital image. The camera is moved horizontally in such a way that the reference point is in the camera field of view. A photo of the reference point on the ground is taken. Then the camera is moved to another point on the ground to a distance providing an overlap of the digital image on the preset scale. The survey materials are processed (RF Patent No. 2207504, 2001).

A disadvantage of said method is the low productivity and high labor intensity of the survey.

There is a known method for obtaining the Earth's surface images comprising acquisition of a full-color image of an Earth's surface section and a full-color image of the same surface section with a smaller area but with better resolution suitable for further orthotransformation. A device of said method comprises two electro-optical photo sensors fixed in the body of the device, one with a wide-angle-lens, another - with a long-focal-length lens; the lens axes of said photo sensors are located vertically and parallel to each other (US Application publication No. 2011/0122300, 2011).

Said method and device have low survey performance and require large computational resources of the automated systems for the obtained information processing.

The closest technical solution to the proposed method is the method for obtaining the Earth's surface images from a moving carrier, comprising photographing the surface under survey with several electro-optical photo sensors with partial overlapping of subframes obtained from each photo sensor, which are jointly forming a central projection frame in the shape of a band with the longer side thereof oriented across the direction of the carrier movement, followed by obtaining said frames in the course of the carrier movement with said frames partially overlapping each other, and subsequent combining of the frames into a single image.

The known method is implemented in the device comprising a holding fixture for at least two electro-optical photo sensors wired with data receiving, processing and storage units (US Application publication No. 2011/0122223, 2011).

The disadvantages of the known method and device are low performance of the survey, difficulty in obtaining the final image, low quality of the images obtained due to slow optics with a wide viewing angle, and the presence of geometric aberrations distorting the edges of the photographs. In addition, the non-simultaneous operation of various photo sensors in the known device makes it necessary to measure carrier motion parameters with rather high spatial accuracy (at least, no less than ½ to ¼ of pixel projection on the survey surface), or to stabilize the spatial position of the survey system in the world coordinate system (CS) for the time of the conducted survey. In practice, this amounts to placing the aero photographic system onto a platform, stabilized with gyroscopic sensors, and, as a result, in rather significant limitations of the survey system performance (residual geometric plane error, "blur" in images, etc.).

### Disclosure of the Invention

The objects of the present invention are to improve survey performance, reduce labor intensity, and improve image quality.

The technical results achieved by this invention are enlarged capture width in surface photography with no increase in the lens's field-of-view angle, minimal changes of the object observation angle when switching between adjacent frames en route, reduced exposure time during a survey, decreased chance of obtaining a blurred image.

The stated objectives and technical results are achieved by the claimed method, wherein subframes are obtained by taking photos of the surface at an angle to the vertical, which is gradually increased towards the ends of the band; and when the subframes are produced in the course of photographing, all photo sensors expose simultaneously; wherein the central projection frame is obtained with the frame band's width to length ratio maintained at the 1 : 5...100 range, while frequency of the photo sensors exposure is aligned with the carrier movement, ensuring overlap of adjacent frames of the central projection by no more than 50 %. The device of said method comprises photo sensors fixed in a holding fixture in such a way that the projections of their optic axes onto the vertical plane are at an angle to the vertical, said angle unidirectionally varies from one photo sensor to another by the amount not exceeding the projection of the photo sensor view angle onto said plane; wherein said projections of optic axes of said photo sensors onto another vertical plane, perpendicular to the first one, form an angle that is no bigger that 50 % of the projection of the photo sensor view angle onto said plane.

These distinctive features are essential.

The feature of simultaneous exposure of all photo sensors during each frame making is due to the need of eliminating the effect of the carrier movement parameters on the formation of the output (final) image from many input images, at least in the cumulative exposure interval of all photo sensors of the system. The requirement of simultaneous exposure is also necessary for the full calibration of the device, which would be impossible otherwise due to the uncertain dependence of the camera location in space at the moment of photographing, which, in its turn, is the result of the uncertainty of the carrier-movement-in-space law. This uncertainty is inherent, in particular, to all aircraft moving in the atmosphere.

The wide angle requirement with a set ratio of the obtained frame band sides is directly responsible for the minimal changes in the object observation angle when switching between adjacent frames en route, which, in turn, facilitate the automated search of the points linking adjacent frames and subsequent aerial triangulation. "Wide angle" means choosing the output frame size in such a way that the side of the frame oriented across the carrier's movement direction is much longer than the side oriented along the carrier's movement direction. Additionally, the output frame of this system remains a homocentric frame of the central projection despite the wide angle. Thus, a comprehensive application of widely available and well developed mathematical tools of frame photogrammetry for the processing becomes possible, and the need to uphold the carrier motion law throughout the survey can be eliminated Minimization of angle changes, on the one hand, facilitates the setting of correlated automation that ensures identification of images of individual objects in overlapping areas within the course of a survey, normally called "a search for linking points". In further photogrammetric plotting, the coordinates of the points found in CS frames are used for the phototriangulation model building and calculation thereof, obtaining results as parameters to establish the device's external orientation at the moment of photo taking.

In addition, going below the specified lower threshold of the frame band's length to width ratio leads to a significant reduction in survey productivity, while exceeding the specified upper threshold of said ratio leads to noticeable geometric distortions and difficulties in recording and compensation of projection distortions. Frames' overlapping in the course of the carrier movement of less than 50 % ensures a high degree of image identification of the objects under survey, providing high accuracy in linking separate frames into one single film, if performance of the survey is sustained at a high level. The optic axes angle of photo sensors ensures a wide-angle capability of the device without increasing the lens field of view angle in the electro-optical photo sensor, resulting in full use of narrow-angle optics advantages. Changing the photo sensors' optic axes projection into the vertical plane from one photo sensor to another by an amount not exceeding the field-of-view angle of the photo sensor ensures an overlap of the adjacent subframes in the frame band for an accurate linking of subframes; and nomination of the axes slope angle in a perpendicular plane is the condition ensuring that there is no omissions in photographing surface sections between the frames taken in the course with no more than 50 % overlapping of the adjacent frames.

### Brief Description of the Drawings

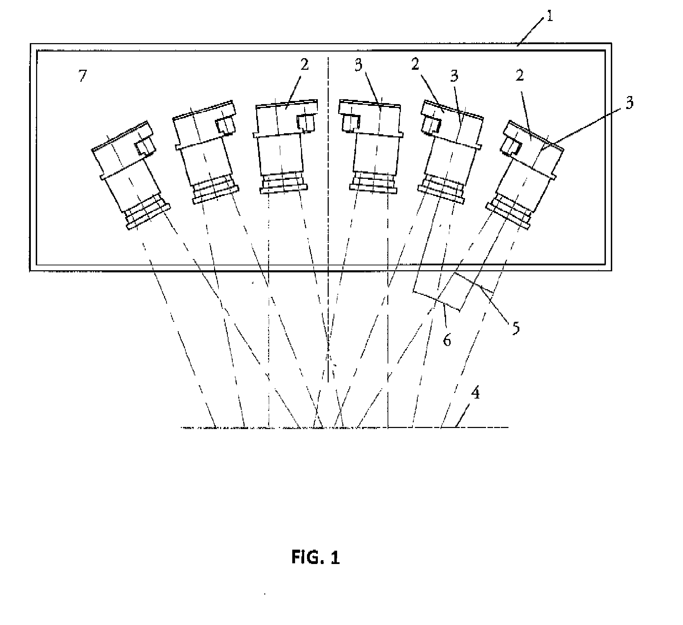

Fig.1 shows overall scheme of the apparatus, top view.

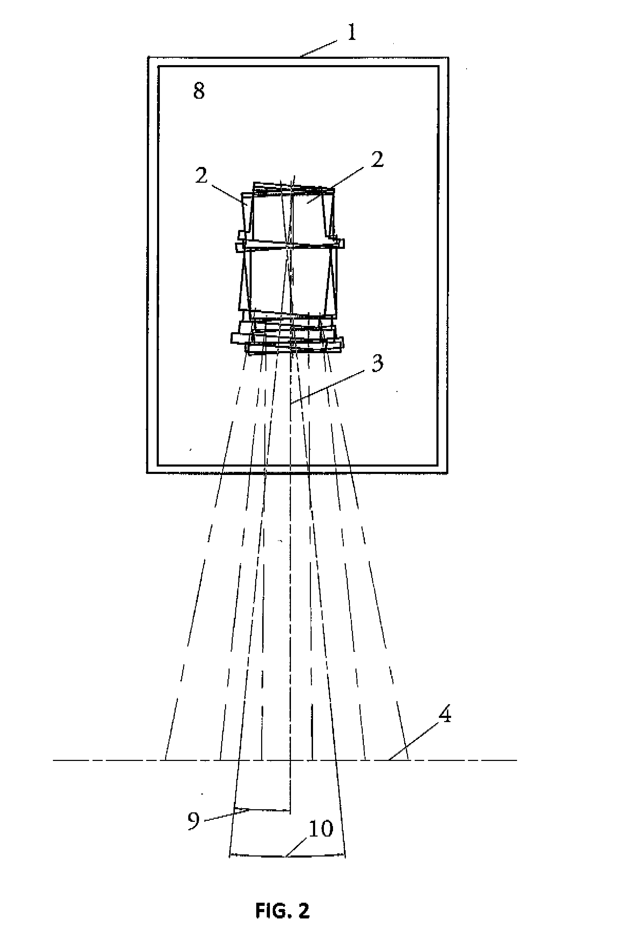

Fig.2 shows overall scheme of the apparatus, side view.

### Preferred Embodiment

The device comprises holding fixture 1 containing electro-optical photo sensors 2, optical axes 3 thereof are located at an angle to the vertical plane and have different slope angles 6. Projections of said angles onto vertical plane 7 unidirectionally vary from one photo sensor to another by the amount not exceeding field-of-view angle 5 of photo sensor 2. In addition,, photo sensors 2 can be located at random while logically interlinking by the specified condition. In particular, a photo sensor with any angle of optic axis deflection from the vertical plane can be selected as conditionally initial. Next photo sensor can be located in the holding fixture independently of the conditionally initial sensor, but it is interrelated with said sensor on the condition of increasing or decreasing the slope angle by the amount not exceeding the field-of-view angle of this photo sensor. The third photo sensor can also be fixed in holder 1 independently of the others, but, in turn, it is interrelated with the second photo sensor by the relationship specified, and so on, increasingly or decreasingly, until the common picture band 4 width to length ratio reaches 1 : 5...100. Projections of specified photo sensors' optic axes onto another vertical plane 8, which is perpendicular to the first one, form different angles, e. g. 9 and 10, not exceeding 50 % of the photo sensors' field-of-view angle 5 projections onto this plane. Thus, each subframe created by each photo sensor 2 jointly creates frame 4 of the central projection as a band with overlapping subframes. Subframe overlapping is ensured by the specified condition of changing the slope angle of the photo sensors' optic axis.

### Industrial applicability

The claimed device of the present invention is as follows:

The device is placed on a carrier, for example, aircraft, in such a way that vertical plane 7, to which the slope angle projections of photo sensors 2 optic axes change by the amount not exceeding the photo sensors' field-of-view angle, is perpendicular to the direction of the aircraft flight direction. Interrelation between photo sensors' optic axes slope angles 6 and field-of-view angle 5 guarantees overlapping of subframes received by photo sensors to provide correlative processing of subframes while forming output frames, said processing is based on the existence of spatial (directional) overlapping of subframes, the data on focal distances in lenses of electro-optical photo sensors 2 and on position 6 of the angles they form relative to one another. The overlap should be sufficient to identify the objects (contours) with pixel dimensions and contrast sufficient for the mutual identification thereof (search of points common to the adjacent subframes) with high degree of probability.

During a flight, photo sensors are periodically exposed in order for the frequency of photographing to correlate with the aircraft speed, flight altitude, and photo sensors' field-of-view angle to provide at least 50 % overlapping of the adjacent frames along the aircraft course. Photo sensors are exposed simultaneously for each photo taking. The frame of the central projection formed by subframes, looks like a long band, with the longer side thereof oriented across the carrier's moving direction with the width to length ratio of 1 : 5...100. Said ratio was obtained empirically during selection of optimal frame sizes and the size of adjacent frames overlapping along the carrier's movement course to yield a sufficient number of common linking points and to ensure correct linking of frames to form an output image. A minimum of 30 common linking points are required for the correct linking of the frames. This number of points is normally found and reliably identified at the minimum width to length ratio of 1:5. Conversely, at a lower ratio, the whole frame may be filled with objects with no distinguishable points, for example, a field or a lake. Additionally, it is noteworthy that the frame's bandwidth should be rather narrow, corresponding to the small viewing angle. That is necessary for reliable identification of common points in adjacent frames, as at large viewing angles, the same objects in adjacent frames, selected as such points, are seen at different or larger viewing angles and may have different characteristics, which significantly reduces the probability of identifying thereof. If the upper limit of the ratio is exceeded, as noted above, significant and hard to correct distortions may occur at the edges of the frame band.

### Examples illustrating the claimed method

### Example 1

The device of the claimed method comprises 18 electro-optical photo sensors with lenses and digital matrices (aspect ratio 4:3) located behind the lenses, one matrix behind each lens. The focal distance of the lenses is 50 mm. The field-of-view angle corresponding to one of the photo sensors in the device is 5.6 degrees. The total transversal field of view of the device is 100.3 degrees. The total longitudinal field of view of the device is 4.5 degrees.

During a flight path, photo sensors are simultaneously exposed with the time of exposure 0.2 msec. The relative flying height ensuring the real-time resolution of 30 cm/pixel is 3.05 km. The linear frame size in the direction "across the flight" at this flying height is 7.44 km. The linear frame size in the direction "along the flight" is 0. 24 km. Thus, the frame's bandwidth to length ratio is 1: 31. At the aircraft speed of 500 km/hour and 50% overlapping of the adjacent frames, the survey performance is 446.4 km²/hour.

### Example 2

The device of the claimed method comprises 6 electro-optical photo sensors with lenses and digital matrices located behind the lenses, one matrix behind each lens, with aspect ratio 4:3. The focal distance of the lenses is 16 mm. The field-of-view angle corresponding to one of the photo sensors in the device is 17.5 degrees. The total transversal field of view of the device is 104.8 degrees. The total recorded longitudinal field of view of the device (accounting for the optic axes deviations) is 14 degrees. The relative flying height ensuring the real-time resolution of 30 cm/pixel is 0.98 km. The linear frame size in the direction "across the flight" at this flying height is 2.53 km. The linear frame size in the direction "along the flight" is 0.24 km. Thus, the frame's bandwidth to length ratio is 1: 0.5. The photo sensors are simultaneously exposed with the exposure time of 0.1 msec.

At the aircraft speed of 400 km/hour and 50 % overlapping of the adjacent frames the survey performance is 121.4 km²/hour.

### Example 3

The device of the claimed method comprises 10 electro-optical photo sensors with lenses and digital matrices located behind the lenses, three matrices behind each lens, with aspect ratio 4:3. The focal distance of the lenses is 100 mm. The filed-of-view angle corresponding to one of the photo sensors in the device is 8.4 degrees. The total transversal field of view of the device is 83.5 degrees. The total used longitudinal field of view of the device (accounting for the optic axes deviation) is 2.3 degrees. The relative flying height ensuring the real-time resolution of 30 cm/pixel is 6.11 km. The linear frame size in the direction "across the flight" at this flying height is 11.08 km. The linear frame size in the direction "along the flight" is 0.24 km. Thus, the frame's bandwidth to length ratio is 1: 46. The photo sensors are simultaneously exposed with the exposure time of 0.25 ms.

At the aircraft speed of 700 km/hour and 50 % overlapping of the adjacent frames the survey performance is 930.7 km²/hour.

### Example 4

The device of the claimed method Is similar to that of Example 3, but the number of photo sensors is increased to 18, and the aspect ratio is 1: 100. The survey performance at the flying height of 8.5 km and the aircraft speed of 830 km/hour is 2390 km²/hour.

### Example 5

The device of the claimed method is similar to that of Example 2, but the number of photo sensors is decreased to 4, and the aspect ratio is 1:5. The survey performance at the flying height of 0.8 km and the aircraft speed of 300 km/hour is 43.2 km²/hour.

The proposed method and device ensure high performance of the survey with concurrent improvement of quality of the output image.

## Claims

1. A method for obtaining the Earth's image from a moving carrier, wherein the observed surface is photographed with several electro-optical photo sensors with partial overlapping of subframes obtained from each photo sensor and jointly forming a central projection frame in the shape of a band with the longer side thereof oriented transversally to the carrier movement direction, said frames are sequentially obtained in the course of the carrier movement with partial overlapping of the frames followed by combining the frames into one image, wherein the subframes are obtained by photographing the surface at an angle to the vertical, which gradually increases toward the ends of the band, wherein all the photo sensors expose simultaneously during photographing.

2. The method of claim 1, wherein the central projection frame is obtained at the bandwidth to length ratio maintained at the 1 : 5...100 range.

3. The method of claim 1, wherein the periodicity of the photo sensors exposure is aligned with the carrier movement, ensuring overlap of adjacent frames of the central projection by no more than 50 %.

4. A device of the claimed method of claim 1, comprising a holding fixture with a minimum of two electro-optical photo sensors fixed therein, wherein said photo sensors are fixed in the holder in such a way that their optic axes projections to the vertical plane are at an angle to the vertical, said angle unidirectionally varies from one photo sensor to another by the amount smaller than the projection of the photo sensor view angle onto the said plane, wherein said projections of said photo sensors' optic axes onto another vertical plane, perpendicular to the first one, form an angle that is no bigger than 50 % of the projection of the photo sensor view angle to this plane.
